(19) Europäisches Patentamt
European Patent Office
Office européen des brevets

(11) EP 4 065 386 B1

(12) # FASCICULE DE BREVET EUROPEEN

(45) Date de publication et mention de la délivrance du brevet:
**16.08.2023 Bulletin 2023/33**

(21) Numéro de dépôt: **20821339.7**

(22) Date de dépôt: **18.11.2020**

(51) Classification Internationale des Brevets (IPC):
***B60C 11/00** (2006.01)* ***B60C 9/20** (2006.01)*

(52) Classification Coopérative des Brevets (CPC):
**B60C 11/0075; B60C 11/0083;** B60C 2009/2012; B60C 2009/2016; B60C 2009/2074; B60C 2009/2083; B60C 2009/209; B60C 2011/0025; B60C 2011/0033; B60C 2200/06

(86) Numéro de dépôt international:
**PCT/FR2020/052117**

(87) Numéro de publication internationale:
**WO 2021/105588 (03.06.2021 Gazette 2021/22)**

(54) **PNEUMATIQUE COMPORTANT UNE BANDE DE ROULEMENT CONSTITUEE DE PLUSIEURS MELANGES ELASTOMERIQUES**

REIFEN MIT EINER LAUFFLÄCHE AUS MEHREREN ELASTOMERMISCHUNGEN

TYRE COMPRISING A TREAD FORMED BY MULTIPLE ELASTOMER BLENDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2019 FR 1913383**

(43) Date de publication de la demande:
**05.10.2022 Bulletin 2022/40**

(73) Titulaire: **COMPAGNIE GENERALE DES ETABLISSEMENTS MICHELIN**
**63000 Clermont-Ferrand (FR)**

(72) Inventeurs:
- **BESTGEN, Luc**
  **63040 Clermont-Ferrand Cedex 9 (FR)**
- **GUERBERT-JUBERT, Jean-Luc**
  **63040 Clermont-Ferrand Cedex 9 (FR)**
- **LAFORT, François**
  **63040 Clermont-Ferrand Cedex 9 (FR)**

(74) Mandataire: **Le Cam, Stéphane Georges Elie**
**Manufacture Française des Pneumatiques Michelin**
**DCJ/PI - F35 - Ladoux**
**23, place des Carmes-Déchaux**
**63040 Clermont-Ferrand Cedex 9 (FR)**

(56) Documents cités:
**WO-A1-2017/149222** **WO-A1-2018/162863**
**WO-A1-2019/002726**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 065 386 B1

## Description

La présente invention concerne un pneumatique, plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Radialement à l'extérieur de l'armature de sommet, on trouve la bande de roulement habituellement constituée de matériaux élastomériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ». Le rayon d'un point du pneumatique est la distance radiale entre ledit point et l'axe de rotation du pneumatique.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984. Les mesures sont effectuées sur câbles extraits de pneumatiques neufs.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérèse, d'un profilé de caoutchouc couvrant au moins les côtés et les bords marginaux de l'armature de sommet et constitué d'un mélange caoutchouteux à très faible hystérèse.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune auxdites deux nappes de travail.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Afin d'augmenter encore la durée de vie des pneumatiques, il est usuel de choisir des matériaux élastomériques constitutifs de la bande de roulement présentant des propriétés de résistance en usure améliorées. De tels matériaux pénalisant le plus souvent les propriétés hystérétiques, il est encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Les propriétés d'endurance des pneumatiques peuvent encore être altérées du fait de perforations de la bande de roulement apparaissant lors de roulage du fait de cailloux ou d'autres objets pouvant venir agresser la bande de roulement. Ces perforations peuvent conduire à une dégradation des éléments de renforcement de l'armature de sommet par oxydation, rendant ainsi le pneumatique non rechapable. Dans des cas d'endommagements par oxydation importants, la dégradation des éléments de renforcement peut nécessiter un changement de pneumatique sur le véhicule avant l'usure complète de la bande de roulement.

Il est notamment connu pour éviter les risques d'altération des couches de travail de prévoir une couche de protection telle que décrite précédemment, celle-ci jouant un rôle sacrificiel en cas d'agression de type perforation ou agression de la bande de roulement et permettant un éventuel rechapage, l'armature de sommet étant par ailleurs préservée.

Ces solutions n'empêchent pas les perforations et peuvent ne pas être suffisantes, dans certaines conditions de roulage particulièrement sévères, pour préserver l'intégrité de l'ensemble de l'armature de sommet.

Le document WO2017149222 décrit un pneumatique dont l'armature sommet autorise un allègement du pneumatique et de meilleures performances au ragrd des chocs subis par la bande de roulement.

La demande de brevet WO 2018/162863 décrit un pneumatique qui présente des performances d'usure au niveau de celles des pneumatiques décrits précédemment, dont les montées en température dans la zone du sommet sont limitées pour de meilleures performances hystérétiques et dont les performances en termes de résistance aux perforations et aux agressions sont améliorées lors de roulage sur certains types de sols caillouteux.

Les inventeurs se sont donnés pour mission de proposer des pneumatiques autorisant une distance de roulage plus importante avant d'envisager un rechapage et ainsi améliorer encore les performances en termes d'usure, et dont les performances hystérétiques et les performances en termes de résistance aux perforations et aux agressions sont améliorées en comparaison de pneumatiques plus usuels.

Ce but a été atteint selon l'invention par un pneumatique pour véhicule de type poids lourd, comprenant une armature de sommet comprenant deux couches de sommet de travail d'éléments de renforcement croisés d'une couche à l'autre en faisant avec la direction circonférentielle des angles ($\alpha 1$, $\alpha 2$) compris entre 8° et 45°, lesdits angles $\alpha 1$ et $\alpha 2$ étant orientés de part et d'autre de la direction circonférentielle, elle-même coiffée radialement d'une bande de roulement dont la sculpture comporte au moins deux rainures circonférentielles, réunie à deux bourrelets par l'intermédiaire de deux flancs, ladite bande de roulement comprenant au moins deux couches de mélanges élastomériques radialement superposées, selon lequel

- les deux couches de sommet de travail s'étendent axialement sur au moins la largeur axiale située entre les deux rainures circonférentielles axialement les plus extérieures, et sont seules présentes pour constituer l'armature de sommet sur au moins 80 % de la largeur axiale de l'armature de sommet,

- les éléments de renforcement de la couche de travail radialement la plus extérieure forment un angle $\alpha 2$ avec la direction circonférentielle supérieur en valeur absolue à l'angle $\alpha 1$ formé par les éléments de renforcement de la couche de travail radialement la plus intérieure avec la direction circonférentielle,

- la valeur absolue de la différence entre les valeurs absolues des angles $\alpha 2$ et $\alpha 1$ est supérieure à 4°,

- l'angle moyen $\alpha$ satisfait la relation :

$$14+131*\exp(-L/100) < \alpha < 20+164*\exp(-L/100),$$

  $\alpha$ étant défini par la relation $\mathrm{Arctan}((\tan(|\alpha 1|)*\tan(|\alpha 2|))^{1/2})$, L étant la largeur maximum du pneumatique mesurée selon la direction axiale et exprimée en mm,

- le ratio d'utilisation du potentiel de rupture F2/FR2 de la couche de travail radialement la plus extérieure est inférieur à 1/6, dans lequel :

FR2 est la force rupture en extension uniaxiale des câbles de la couche de travail radialement la plus extérieure,

$$F2 = p_2 * Tc * [(\tan(|\alpha 1|)/((\tan(|\alpha 1|)+\tan(|\alpha 2|))) / \cos^2(|\alpha 2|) + C_F],$$

avec

$$Tc = 0.092 * P * Rs* ( 1-(Rs^2-R_L^2)/(2*Rt*Rs) ),$$

P : la pression de gonflage du pneumatique,

$$C_F = 0.00035*(\min((L-80) / \sin(|\alpha 1|), (L-80) / \sin(|\alpha 2|), 480)-480),$$

$p_2$ : le pas de pose des éléments de renforcement de la couche de sommet de travail radialement la plus extérieure, mesuré perpendiculairement aux éléments de renforcement au niveau du médian circonférentiel,

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,
Es : distance radiale entre le point radialement le plus à l'extérieur du pneumatique et sa projection orthogonale sur la face radialement extérieure d'un élément de renforcement de la couche de sommet de travail radialement la plus intérieure,
RL : moyenne des rayons des points axialement les plus à l'extérieur de chaque côté du pneumatique,
Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur de la bande de roulement

- la première couche formant la partie radialement extérieure de la bande de roulement est constituée d'un premier mélange élastomérique présentant un module d'élasticité sous tension à 10 % d'allongement inférieur ou égal à 10 MPa,

- une deuxième couche radialement intérieure est constituée d'une partie centrale et de deux parties axialement extérieures, ladite partie centrale présentant une largeur axiale comprise entre les extrémités de la couche d'éléments de renforcement de l'armature de sommet axialement la moins large,

- ladite partie centrale de la deuxième couche est constituée d'un deuxième mélange élastomérique présentant un module d'élasticité sous tension à 10 % d'allongement supérieur ou égal à 15 MPa,

- le deuxième mélange élastomérique présente une valeur maximale de tan(δ), noté tan(δ)max, inférieure ou égale à 0.30,

- l'épaisseur mesurée selon la direction radiale de ladite partie centrale, exprimée en millimètre, est supérieure ou égale à 1 + max(1.5*($p_2$ - 1.5) + 11*(F2/FR2 - 0.14),0), et

- lesdites deux parties axialement extérieures de la deuxième couche sont constituées d'un troisième mélange élastomérique présentant une valeur maximale de tan(δ), noté tan(δ)max, inférieure à 0.15.

La largeur L et les différents rayons sont mesurés sur un pneumatique monté sur sa jante nominale et gonflé à sa pression nominale, et sont exprimés en millimètres.
L'épaisseur Es et le pas $p_2$ sont mesurés sur une coupe du pneumatique et sont exprimés en millimètres.
Les angles α1 et α2, exprimés en degré, sont également mesurés sur une coupe du pneumatique. Les mesures d'angles sont selon l'invention réalisées au niveau du plan médian circonférentiel.
Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 2 mm d'épaisseur et de 78 $mm^2$ de section), soumis à une sollicitation sinusoïdale en cisaillement simple alterné, à la fréquence de 10Hz, à une température de 60°C. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan(δ) mesuré sur le cycle retour. Pour le cycle retour, on indique la valeur maximale de tan(δ) observée, noté $\tan(\delta)_{max}$.
Dans le cas où l'épaisseur du matériau est comprise entre 1 et 2mm, le facteur de perte tan(δ) est mesuré selon la même méthode et dans les mêmes conditions, telles que décrites précédemment, sur un échantillon de composition vulcanisée qui se présente sous la forme d'une éprouvette cylindrique de 1 mm d'épaisseur et de 78 mm2 de section.
La résistance au roulement est la résistance qui apparaît lorsque le pneumatique roule et révèle la montée en température dudit pneumatique. Elle est ainsi représentée par les pertes hystérétiques liées à la déformation du pneumatique durant une révolution. Les valeurs de tan(δ) des matériaux utilisés sont mesurées à 10Hz entre 30 et 100°C pour intégrer l'effet des différentes fréquences de déformation induites par la révolution du pneumatique. La valeur de tan(δ) à 60°C correspond ainsi à un indicateur de la résistance au roulement du pneumatique en roulage.
L'invention vise plus particulièrement des pneumatiques à armature de carcasse radiale.
Les essais réalisés avec des pneumatiques conformes à l'invention ont mis en évidence que les pneumatiques présentent des performances en termes d'usure améliorées, de résistance au roulement et d'endurance satisfaisantes et notamment dont les performances en termes de résistance aux perforations et aux agressions sont améliorées en comparaison de pneumatiques plus usuels.

Les inventeurs ont tout d'abord su mettre en évidence que la combinaison des différents mélanges élastomériques tels que décrits précédemment permet de conduire à un compromis entre les propriétés de résistance à l'usure et les montées en température au niveau du sommet du pneumatique satisfaisant pour les usages routiers tels que décrits précédemment. En effet, la combinaison des différents mélanges telle que décrite associée en outre à une armature de sommet allégée, celle-ci étant constituée uniquement de deux couches de travail, permet de diminuer l'hystérèse globale du pneumatique, les mélanges élastomériques des deux parties axialement extérieures de la deuxième couche radialement la plus intérieure compensant les propriétés hystérétiques élevées du mélange radialement le plus extérieur. En effet, le mélange radialement le plus extérieur choisi par exemple pour ses propriétés de rigidité conduisant à des performances en matière d'usure élevées favorise les montées en température de la bande de roulement. Les inventeurs ont encore mis en évidence que le choix du matériau de la partie centrale de la deuxième couche dont les propriétés hystérétiques ne sont pourtant pas favorables n'est pas pénalisant pour ce qui est des montées en température car la partie centrale de la deuxième couche subit peu de déformations lors des roulages.

Par ailleurs, les inventeurs ont su mettre en évidence, que l'association de la combinaison des différents mélanges élastomériques tels que décrits précédemment et de la valeur absolue de la différence entre les valeurs absolues des angles précités $\alpha 1$ et $\alpha 2$ combinée à l'angle moyen $\alpha$ et au ratio d'utilisation du potentiel de rupture F2/FR2 améliore encore, de manière surprenante, les performances du pneumatique en termes d'usure.

D'autre part, le mélange élastomérique constituant la partie centrale de la deuxième couche présente par contre des propriétés de rigidité que les inventeurs pensent favorables aux performances en termes de résistance à la perforation. Les inventeurs ont encore mis en évidence que la présence de la première couche radialement à l'intérieur des rainures sur une épaisseur radiale d'au moins 1 mm permet de limiter les risques d'apparition et la propagation de fissures dans la partie radialement intérieure des rainures du fait de la rigidité importante de la partie centrale de la deuxième couche. Dans le cas contraire, de telles fissures pourraient être la cause d'amorces d'arrachements d'une ou plusieurs parties de la bande de roulement délimitée par ces rainures.

En outre, les résultats ont mis en évidence que les pneumatiques selon l'invention peuvent être allégés en diminuant le nombre de couches constitutives de l'armature de sommet, ladite armature contribuant cependant à améliorer les propriétés d'endurance du sommet du pneumatique notamment à l'égard de chocs apparaissant sur la bande de roulement par exemple lors de roulage sur sol caillouteux. Il est en effet connu de l'homme du métier que pour améliorer les performances d'endurance de l'armature de sommet d'un pneumatique à l'égard de ce type de chocs, il est usuel d'augmenter le nombre de couches d'éléments de renforcement.

Les inventeurs pensent interpréter ces résultats du fait de l'angle formé avec la direction circonférentielle par les éléments de renforcement de la couche de sommet de travail radialement la plus intérieure qui est plus petit en valeur absolue que celui formé par les éléments de renforcement de la couche de sommet de travail radialement la plus extérieure. Ils ont constaté que cet angle plus petit semble entraîner un retard dans la prise de tension par les éléments de renforcement lors d'un tel choc. Usuellement, lors de chocs comparables à ceux observés lors d'un roulage sur sol caillouteux la rupture d'éléments de renforcement si elle intervient s'observe sur la couche radialement la plus intérieure. Ces constats semblent indiquer que face à ce type d'agressions, la différence d'angles des éléments de renforcement entre les deux couches de sommet de travail permet d'améliorer les performances d'endurance du pneumatique tout en diminuant le nombre de couches de l'armature de sommet.

Les inventeurs ont encore fait le constat que le choix de la valeur absolue de la différence entre les valeurs absolues des angles précités $\alpha 1$ et $\alpha 2$ associé à l'angle moyen $\alpha$ et au ratio d'utilisation du potentiel de rupture F2/FR2 tels que définis selon l'invention peuvent permettre d'éliminer la couche de protection usuellement mise en place radialement à l'extérieur des autres couches de l'armature de sommet. Une telle couche est habituellement présente pour être sacrifiée en cas d'agressions du pneumatique de type coupures pouvant venir altérer l'intégrité d'éléments de renforcement métalliques par des phénomènes de corrosion associés à la fatigue desdits éléments de renforcement. Les inventeurs font effectivement le constat que les éléments de renforcement de la couche de sommet de travail radialement la plus extérieure, d'un pneumatique selon l'invention, sont moins sollicités lors du gonflage du pneumatique ou bien lors de son utilisation en roulage normal que les éléments de renforcement d'une couche de sommet de travail radialement la plus extérieure d'un pneumatique plus usuel ; un tel pneumatique plus usuel présente des différences d'angles en valeur absolue entre les éléments de renforcement des différentes couches de travail plus petites, un angle des éléments de renforcement de la couche de travail radialement la plus intérieure supérieur ou égal en valeur absolue à celui des éléments de renforcement de la couche de travail radialement la plus extérieure et un ratio d'utilisation du potentiel de rupture F2/FR2 plus important. Les éléments de renforcement de la couche de sommet de travail radialement la plus extérieure d'un pneumatique selon l'invention présentent ainsi des propriétés d'endurance bien supérieures à ceux d'un pneumatique plus usuel ; les inventeurs font ainsi le constat que la suppression de la couche de protection est rendue possible et permet de contribuer à l'allègement du pneumatique.

Selon un mode de réalisation préféré de l'invention, ladite première couche formant la partie radialement extérieure de la bande de roulement est présente radialement à l'intérieur desdites au moins deux rainures sur une épaisseur mesurée selon la direction radiale supérieure à 2 mm.

Avantageusement selon l'invention, ladite deuxième couche est au contact de ladite première couche formant la partie radialement extérieure de la bande de roulement.

De préférence également selon l'invention, afin de lutter encore mieux contre les risques liés aux agressions par perforation de la bande de roulement, le deuxième mélange élastomérique présente un module d'élasticité sous tension à 10 % d'allongement supérieur ou égal à 22 MPa.

Bien que les inventeurs aient mis en évidence que la partie centrale de la deuxième couche est peu sollicitée en termes de déformation, le deuxième mélange élastomérique présente avantageusement une valeur maximale de tan(δ), noté tan(δ)max, inférieure ou égale à 0.20.

Selon une variante de réalisation de l'invention, la partie centrale de ladite deuxième couche de la bande de roulement est totalement constituée du deuxième mélange élastomérique.

Selon une variante de réalisation de l'invention, selon laquelle, les deux couches de travail sont couplées sur au moins une partie de leur longueur selon la direction axiale, ladite partie centrale présente une largeur axiale comprise entre les extrémités de la zone de couplage de la couche de travail axialement la plus étroite et avantageusement au plus égale à la largeur axiale de la zone de couplage.

Au sens de l'invention, des couches d'éléments de renforcement d'armature de sommet sont dites couplées si les éléments de renforcement respectifs de chacune des couches sont séparés radialement d'au plus 1,5 mm, ladite épaisseur de caoutchouc étant mesurée radialement entre les génératrices respectivement supérieure et inférieure desdits éléments de renforcement de chacune des couches.

Les inventeurs ont encore su mettre en évidence qu'en présence de deux couches de travail couplées sur une certaine largeur axiale et dont les extrémités sont découplées notamment pour permettre d'absorber les contraintes de cisaillement entre les extrémités des deux couches de travail, il est préférable que la partie centrale de la deuxième couche et plus précisément le deuxième mélange élastomérique ne soit pas présent dans la zone de découplage pour éviter de trop fortes élévations de température.

Selon un mode de réalisation préféré de l'invention, la valeur absolue de la différence entre les valeurs absolues des angles α2 et α1 est supérieure ou égale à 10° et de préférence supérieure à 14°. Selon ce mode de réalisation, et conformément aux interprétations données ci-dessus, il va être possible d'améliorer encore les performances d'endurance des éléments de renforcement de la couche de travail radialement la plus extérieure et/ou améliorer encore les performances du pneumatique à l'égard de chocs tels que ceux subis lors de roulage sur des sols caillouteux.

Avantageusement encore selon l'invention, le ratio d'utilisation du potentiel de rupture F2/FR2 de la couche de travail radialement la plus extérieure est inférieur à 1/8. Un tel ratio d'utilisation du potentiel de rupture F2/FR2 contribue encore à améliorer les performances d'endurance des éléments de renforcement de la couche de travail radialement la plus extérieure lors de l'utilisation du pneumatique.

De préférence selon l'invention, le ratio d'utilisation du potentiel de rupture F1/FR1 de la couche de travail radialement la plus intérieure est inférieur à 1/3, dans lequel :

FR1 est la force rupture en extension uniaxiale des câbles de la couche de travail radialement la plus intérieure,

$$F1 = p_1 * Tc * [(\tan(|\alpha 2|)/(\tan(|\alpha 1|)+\tan(|\alpha 2|))) / \cos^2(|\alpha 1|) + C_F],$$

avec

$p_1$ : le pas de pose des éléments de renforcement de la couche de sommet de travail radialement la plus intérieure, mesuré perpendiculairement aux éléments de renforcement au niveau du plan médian circonférentiel.

De préférence encore, le ratio d'utilisation du potentiel de rupture F1/FR1 de la couche de travail radialement la plus intérieure est au moins 30 % supérieur au ratio d'utilisation du potentiel de rupture F2/FR2 de la couche de travail radialement la plus extérieure.

Selon un mode de réalisation de l'invention, les éléments de renforcement des couches de sommet de travail sont des câbles métalliques inextensibles.

Selon un mode de réalisation préféré de l'invention, optimisant l'amincissement du sommet du pneumatique, les deux couches de sommet de travail sont seules présentes pour constituer l'armature de sommet sur la totalité de la largeur axiale de l'armature de sommet.

D'autres détails et caractéristiques avantageux de l'invention ressortiront ci-après de la description d'un exemple de réalisation de l'invention en référence à la figure qui représente une vue méridienne d'un schéma d'un pneumatique selon un mode de réalisation de l'invention.

La figure n'est pas représentée à l'échelle pour en simplifier la compréhension. La figure ne représente qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 315/80 R 22.5, comprend une armature de carcasse radiale 2 ancrée dans deux bourrelets, autour de tringles, non représentés sur la figure. L'armature de carcasse 2 est formée d'une seule couche de câbles métalliques. L'armature de carcasse 2 est frettée par une armature de sommet 5, elle-même coiffée d'une bande de roulement 6. La bande de roulement comporte quatre rainures 3 formant cinq ribs 4.

Les zones basses et bourrelets du pneumatique 1 ne sont notamment pas représentés sur la figure.

Sur la figure, l'armature de sommet 5 est formée radialement de l'intérieur à l'extérieur :

- d'une première couche de travail 51 formée de câbles métalliques inextensibles, continus sur toute la largeur de la nappe, orientés d'un angle $\alpha1$, et

- d'une seconde couche de travail 52 formée de câbles métalliques inextensibles, continus sur toute la largeur de la nappe, orientés d'un angle $\alpha2$ et croisés aux câbles métalliques de la première couche de travail.

Les couches de travail 51 et 52 sont couplées sur une largeur axiale D égale à 198 mm et sont découplées à leurs extrémités par une couche C permettant de limiter les risques liées au cisaillement.

Les câbles métalliques constituant les éléments de renforcement des deux couches de travail sont des câbles de formule 9.35. Ils sont répartis dans chacune des couches de travail avec un pas $p_2$, mesuré entre les câbles selon la normale à la direction de la ligne moyenne des câbles.

Le pneumatique est gonflé à une pression de 8.5 bars.

La largeur axiale de la première couche de travail 51 est égale à 246 mm.

La largeur axiale de la deuxième couche de travail 52 est égale à 228 mm.

La largeur axiale de la bande de roulement est égale à 270 mm.

La largeur axiale L maximum du pneumatique, non représentée sur la figure, est égale à 311 mm.

La valeur mesurée de Re est égale à 537.6 mm.

La valeur mesurée de Es est égale à 22.3 mm.

La valeur moyenne RL des rayons mesurés est égale à 408 mm.

La valeur Rt déterminée sur le pneumatique est égale à 972 mm.

La valeur calculée de Tc est égale à 363.11 N/mm.

Les forces ruptures des éléments de renforcement des couches de sommet de travail FR1 et FR2 sont égales à 2600 N.

Conformément à l'invention, la bande de roulement 6 est constituée d'une première couche 61, constituée d'un premier mélange élastomérique, radialement extérieure et qui vient au contact du sol lors d'un roulage.

L'épaisseur E de ladite première couche 61 mesurée selon la direction radiale, radialement à l'intérieur d'une rainure 3 est égale à 3.5 mm et donc supérieure à 1 mm.

Radialement à l'intérieur de la première couche 61, une deuxième couche 62 est constituée d'une partie centrale 621 et de deux parties axialement extérieures 622. La partie centrale 621 est constituée d'un deuxième mélange élastomérique et les parties axialement extérieures 622 sont constituées d'un troisième mélange.

La largeur axiale $L_{621}$ de la partie centrale 621 de ladite deuxième couche 62 est égale à 144 mm et donc inférieure à la largeur axiale D.

La partie centrale 621 de ladite deuxième couche 62 présente, radialement à l'intérieur d'une rainure 3, une épaisseur H, mesurée selon la direction radiale et exprimée en millimètre supérieure ou égale à $1 + \max(1.5*(p_2 - 1.5) + 11*(F2/FR2 - 0.14),0)$.

Des pneumatiques ont été réalisés sur la base des trois mélanges élastomériques décrits ci-dessous avec certaines de leurs propriétés.

| | Mélange A | Mélange B | Mélange C |
|---|---|---|---|
| NR | 75 | 100 | 100 |
| BR | 25 | | |
| N234 | 50 | | |
| N326 | | 50 | |
| N 683 | | | 45 |
| Résine formophenol | | 8 | |

(suite)

| | Mélange A | Mélange B | Mélange C |
|---|---|---|---|
| HMT3H | | 5 | |
| Anti Oxydant 6PPD | 2 | 2 | 2 |
| ACIDE STEARIQUE | 1.5 | 2 | 1.5 |
| ZNO | 2.5 | 3 | 2.5 |
| SOUFRE | 1 | 5 | 1.5 |
| Accélérateur (CBS) | 1 | 1 | 1.5 |
| $MA_{10}$ (MPa) | 6 | 30 | 4 |
| $tan(\delta)_{max}$ | 0.15 | 0.20 | 0.05 |

Les valeurs des constituants sont exprimées en pce (parties en poids pour cent parties d'élastomères).

Des pneumatiques I1, I2, I3 conformes à l'invention et tels que décrits sur la figure associent, pour former la bande de roulement, le mélange A qui forme la partie radialement extérieure et correspond à la première couche 61, le mélange B, qui correspond à la partie centrale 621 de la deuxième couche 62 et le mélange C qui correspond aux parties axialement extérieures 622 de la deuxième couche 62.

Les pneumatiques I1, I2, I3 selon l'invention ont été réalisés en faisant varier les angles $\alpha 1$ et $\alpha 2$, le pas $p_2$ dans chacune des couches de travail, l'épaisseur E de la partie centrale 621 de ladite deuxième couche 62 mesurée selon la direction radiale, radialement à l'intérieur d'une rainure 3.

Par ailleurs, des pneumatiques de référence ont également été réalisés.

Un premier pneumatique de référence R1 est réalisé selon une configuration correspondant à des réalisations usuelles telles que décrites précédemment, la bande de roulement étant constituée de deux couches radialement superposées, la couche radialement intérieure étant formée d'un seul mélange élastomérique. Il associe un mélange A présent radialement à l'extérieur de la bande de roulement et un mélange C radialement intérieur. Le volume du mélange C est défini usuellement par l'homme du métier pour que la température de fonctionnement du pneumatique corresponde au roulage envisagé avec un tel pneumatique. L'armature de sommet du premier pneumatique de référence R1 est constituée radialement de l'intérieur vers l'extérieur :

- d'une couche de triangulation formée de câbles 9.28, orientés d'un angle de 65°,
- d'une première couche de travail formée de câbles métalliques 9.35 orientés d'un angle égal à 26°, au pas de 2 mm,
- d'une seconde couche de travail formée de câbles métalliques 9.35 orientés d'un angle égal à 18° et croisés avec les câbles métalliques de la première couche de travail, les câbles de chacune des couches de travail étant orientés de part et d'autre de la direction circonférentielle, au pas de 2 mm,
- d'une couche de protection formée de câbles métalliques élastiques 6.35 orientés d'un angle égal à 18°, du même côté que les câbles de la seconde couche de travail.

La largeur axiale de la couche de triangulation est égale à 218 mm.

La largeur axiale de la première couche de travail est égale à 246 mm.

La largeur axiale de la deuxième couche de travail est égale à 228 mm.

La largeur axiale de la couche de protection est égale à 120 mm.

La valeur mesurée de Re est égale à 537.6 mm.

La valeur mesurée de Es est égale à 22.3 mm.

La valeur moyenne RL des rayons mesurés est égale à 408.0 mm.

La valeur Rt déterminée sur le pneumatique est égale à 1152 mm.

La valeur calculée de Tc est égale à 369.3 N/mm.

Les forces ruptures des éléments de renforcement des couches de sommet de travail FR1 et FR2 sont égales à 2600 N.

Un deuxième pneumatique de référence R2 est réalisé avec une armature de sommet identique à celle du pneumatique de référence R1 et sa bande de roulement est semblable à celles des pneumatiques selon l'invention I1, I2, I3.

Un troisième pneumatique de référence R3 est réalisé avec une armature de sommet semblable à celle du pneumatique selon l'invention I1, la bande de roulement étant identique à celle du pneumatique de référence R1.

Les caractéristiques des pneumatiques sont données dans le tableau qui suit :

| | R1 | R2 | R3 | I1 | I2 | I3 |
|---|---|---|---|---|---|---|
| $p_2$ (mm) | 2 | 2 | 2 | 2 | 2.3 | 2 |
| $\alpha1$ (°) | 26 | 26 | 16 | 16 | 16 | 18 |
| $\alpha2$ (°) | -18 | -18 | -30 | -30 | -30 | -28 |
| H (mm) | - | 2 | - | 2 | 2.5 | 2 |
| $1 + \max(1.5*(p_2 - 1.5) + 1\ 1*(F2/FR2 - 0.14),0)$ | 1.89 | 1.89 | 1.55 | 1.55 | 2.20 | 1.69 |
| $C_F$ | - | - | -0.0063 | -0.0063 | -0.0063 | 0 |
| F2 (N) | 398 | 398 | 316.75 | 316.75 | 364.26 | 353.33 |
| F2/FR2 | 0.153 | 0.153 | 0.122 | 0.122 | 0.140 | 0.136 |

Pour les pneumatiques de référence R1 et R2, la valeur F2 est obtenue par une simulation éléments finis, le nombre élevé de couches d'éléments de renforcement ne permettant pas l'utilisation d'un modèle analytique simple.

Pour effectuer une comparaison, des essais similaires sont effectués avec l'ensemble des pneumatiques.

Les premiers essais ont consisté à évaluer la distance parcourue par les pneumatiques avant d'effectuer un rechapage.

Les essais sont réalisés dans des conditions de charge et vitesse identiques pour tous les pneumatiques et les roulages sont effectués sur un véhicule poids lourd sur route ouverte sur des parcours représentatifs des usages classiquement observés sur des véhicules poids lourd. Les roulages sont effectués jusqu'à ce que le pneumatique de référence R3 ait perdu le tiers de la masse de caoutchouc à user, celle-ci correspondant à la masse de mélange de la bande de roulement située radialement à l'extérieur des témoins d'usure du pneumatique. Le tableau ci-après donne le rapport entre la perte de masse du pneumatique de référence R3 et la perte de masse du pneumatique concerné, multiplié par 100.

Les résultats obtenus sont présentés dans le tableau suivant :

| | R1 | R2 | R3 | I1 | I2 | I3 |
|---|---|---|---|---|---|---|
| Usure | 110 | 115 | 100 | 105 | 110 | 115 |

Ces résultats montrent que les pneumatiques selon l'invention autorisent un roulage supérieur à celui du pneumatique de référence R3 et proche de ceux des pneumatiques de référence R1 et R2 avant de nécessiter un rechapage suite à l'usure de la bande roulement.

D'autres essais ont consisté à effectuer un roulage de 10 000 km sur une piste recouverte de cailloux coupants puis à maintenir les pneumatiques dans une atmosphère oxydante pouvant conduire à une oxydation des éléments de renforcement métalliques des couches de travail. Les pneumatiques sont ensuite analysés pour dénombrer le nombre de câbles ruptés et la somme des longueurs corrodées sur la couche de travail radialement la plus extérieure. Le tableau ci-après donne le rapport entre le nombre de câbles ruptés ou la somme des longueurs corrodées du pneumatique de référence R3 et le nombre de câbles ruptés ou la somme des longueurs corrodées du pneumatique concerné, multiplié par 100.

Les résultats obtenus sont présentés dans le tableau suivant :

| | R1 | R2 | R3 | I1 | I2 | I3 |
|---|---|---|---|---|---|---|
| Câbles ruptés | 130 | 150 | 100 | 130 | 115 | 120 |
| Longueur corrodée | 150 | 165 | 100 | 150 | 120 | 130 |

Ces résultats mettent en évidence que les performances en termes de résistance aux perforations et aux agressions de la bande de roulement sont nettement améliorées par la présence de la deuxième couche constituée de deux mélanges. Les valeurs des pneumatiques de référence R1 et R2 sont supérieures du fait de la présence d'une couche de protection qui présente de nombreuses ruptures et zones corrodées.

Par ailleurs, des mesures de résistance au roulement ont été réalisées.

Les résultats des mesures sont présentés dans le tableau suivant. Les mesures sont réalisées en Kg/t. Le tableau ci-après donne le rapport entre la mesure du pneumatique de référence R3 et la mesure du pneumatique concerné, multiplié par 100.

| | R1 | R2 | R3 | I1 | I2 | I3 |
|---|---|---|---|---|---|---|
| Résistance au roulement | 93 | 94 | 100 | 100 | 98 | 102 |

Ces résultats mettent en évidence que la deuxième couche selon l'invention constituée de deux mélanges différents n'a pas d'impact significatif sur la résistance au roulement. L'amélioration obtenue selon l'invention est essentiellement due à l'armature de sommet de l'invention.

## Revendications

**1.** - Pneumatique (1), pour véhicule de type poids lourd, comprenant une armature de sommet (5) comprenant deux couches de sommet de travail (51, 52) d'éléments de renforcement croisés d'une couche à l'autre en faisant avec la direction circonférentielle des angles ($\alpha 1$, $\alpha 2$) compris entre 8° et 45°, lesdits angles $\alpha 1$ et $\alpha 2$ étant orientés de part et d'autre de la direction circonférentielle, elle-même coiffée radialement d'une bande de roulement, réunie à deux bourrelets par l'intermédiaire de deux flancs, ladite bande de roulement comprenant au moins deux couches de mélanges élastomériques radialement superposées, les deux couches de sommet de travail (51, 52) s'étendant axialement sur au moins la largeur axiale située entre les deux rainures circonférentielles axialement les plus extérieures, et étant seules présentes pour constituer l'armature de sommet (5) sur au moins 80 % de la largeur axiale de l'armature de sommet (5),

- les éléments de renforcement de la couche de travail (52) radialement la plus extérieure formant un angle $\alpha 2$ avec la direction circonférentielle supérieur en valeur absolue à l'angle $\alpha 1$ formé par les éléments de renforcement de la couche de travail (51) radialement la plus intérieure avec la direction circonférentielle,
- la valeur absolue de la différence entre les valeurs absolues des angles $\alpha 2$ et $\alpha 1$ étant supérieure à 4°,
- l'angle moyen $\alpha$ satisfaisant la relation :

$$14+131*\exp(-L/100) < \alpha < 20+164*\exp(-L/100),$$

$\alpha$ étant défini par la relation $\mathrm{Arctan}((\tan(|\alpha 1|)*\tan(|\alpha 2|))^{1/2})$, L étant la largeur maximum du pneumatique mesurée selon la direction axiale et exprimée en mm,
- le ratio d'utilisation du potentiel de rupture F2/FR2 de la couche de travail radialement la plus extérieure étant inférieur à 1/6, dans lequel :

FR2 est la force rupture en extension uniaxiale des câbles de la couche de travail radialement la plus extérieure, mesurée en traction selon la norme ISO 6892 de 1984 sur les câbles extraits de pneumatiques neufs,

$$F2 = p_2 * Tc * [(\tan(|\alpha 1|)/((\tan(|\alpha 1|)+\tan(|\alpha 2|))) / \cos^2(|\alpha 2|) + C_F],$$

avec

$$Tc = 0.092 * P * Rs* ( 1-(Rs^2-R_L^2)/(2*Rt*Rs) ),$$

P : la pression de gonflage du pneumatique,

$$C_F = 0.00035*(\min((L-80) / \sin(|\alpha 1|), (L-80) / \sin(|\alpha 2|), 480)-480),$$

pz : le pas de pose des éléments de renforcement de la couche de sommet de travail radialement la plus extérieure, mesuré perpendiculairement aux éléments de renforcement au niveau du médian circonférentiel,

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,
Es : distance radiale entre le point radialement le plus à l'extérieur du pneumatique et sa projection orthogonale sur la face radialement extérieure d'un élément de renforcement de la couche de sommet de travail radialement la plus intérieure,
RL : moyenne des rayons des points axialement les plus à l'extérieur de chaque côté du pneumatique,
Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur de la bande de roulement **caractérisé en ce que** la sculpture de la bande de roulement comporte au moins deux rainures circonférentielles,

- **en ce que** la première couche formant la partie radialement extérieure de la bande de roulement est constituée d'un premier mélange élastomérique présentant un module d'élasticité sous tension à 10 % d'allongement inférieur ou égal à 10 MPa, mesuré en traction selon la norme AFNOR-NFT-46002 de septembre 1988,
- **en ce qu'**une deuxième couche radialement intérieure est constituée d'une partie centrale et de deux parties axialement extérieures, ladite partie centrale présentant une largeur axiale comprise entre les extrémités de la couche d'éléments de renforcement de l'armature de sommet axialement la moins large,
- **en ce que** ladite partie centrale de la deuxième couche est constituée d'un deuxième mélange élastomérique présentant un module d'élasticité sous tension à 10 % d'allongement supérieur ou égal à 15 MPa, mesuré en traction selon la norme AFNOR-NFT-46002 de septembre 1988,
- **en ce que** le deuxième mélange élastomérique présente une valeur maximale de tan(δ), noté tan(δ)max, inférieure ou égale à 0.30, mesurée selon la norme ASTM D 5992-96,
- **en ce que** l'épaisseur H mesurée selon la direction radiale de ladite partie centrale, exprimée en millimètre, est supérieure ou égale à $1 + \max(1.5*(p_2 - 1.5) + 11*(F2/FR2 - 0.14),0)$, et
- **en ce que** lesdites deux parties axialement extérieures de la deuxième couche sont constituées d'un troisième mélange élastomérique présentant une valeur maximale de tan(δ), noté tan(δ)max, inférieure à 0.15.

**2.** - Pneumatique (1) selon la revendication 1, **caractérisé en ce que** ladite première couche formant la partie radialement extérieure de la bande de roulement est présente radialement à l'intérieur desdites au moins deux rainures circonférentielles sur une épaisseur mesurée selon la direction radiale supérieure ou égale à 1 mm et **en ce que** ladite deuxième couche est au contact de ladite première couche formant la partie radialement extérieure de la bande de roulement.

**3.** - Pneumatique (1) selon la revendication 1 ou 2, **caractérisé en ce que** les éléments de renforcement desdites deux couches de sommet de travail (51, 52) sont métalliques.

**4.** - Pneumatique (1) selon l'une des revendications 1 à 3, **caractérisé en ce que** la valeur absolue de la différence entre les valeurs absolues des angles α2 et α1 est supérieure ou égale à 10°, et de préférence supérieure à 14°.

**5.** - Pneumatique (1) selon l'une des revendications 1 à 4, **caractérisé en ce que** le ratio d'utilisation du potentiel de rupture F2/FR2 de la couche de travail (52) radialement la plus extérieure est inférieur à 1/8.

**6.** - Pneumatique (1) selon l'une des revendications 1 à 5, **caractérisé en ce que** le ratio d'utilisation du potentiel de rupture F1/FR1 de la couche de travail (51) radialement la plus intérieure est inférieur à 1/3, dans lequel :

FR1 est la force rupture en extension uniaxiale des câbles de la couche de travail radialement la plus intérieure, mesurée en traction selon la norme ISO 6892 de 1984 sur les câbles extraits de pneumatiques neufs,

$$F1 = p_1 * Tc * [(\tan(|\alpha 2|)/((\tan(|\alpha 1|)+\tan(|\alpha 2|))) / \cos^2(|\alpha 1|) + C_F],$$

avec

$p_1$ : le pas de pose des éléments de renforcement de la couche de sommet de travail radialement la plus intérieure, mesuré perpendiculairement aux éléments de renforcement au niveau du plan médian circonférentiel.

**7.** - Pneumatique (1) selon la revendication 6, **caractérisé en ce que** le ratio d'utilisation du potentiel de rupture F1/FR1 de la couche de travail (51) radialement la plus intérieure est au moins 30 % supérieur au ratio d'utilisation du potentiel de rupture F2/FR2 de la couche de travail (52) radialement la plus extérieure.

**8.** - Pneumatique (1) selon l'une des revendications précédentes, **caractérisé en ce que** les deux couches de sommet de travail (51, 52) sont seules présentes pour constituer l'armature de sommet sur la totalité de la largeur axiale de l'armature de sommet (5).

**Patentansprüche**

**1.** Luftreifen (1) für ein Schwerlastfahrzeug, umfassend eine Scheitelbewehrung (5), umfassend zwei Arbeitsscheitellagen (51, 52) aus Verstärkungselementen, die sich von einer Lage zur anderen überkreuzen, wobei sie mit der Umfangsrichtung Winkel ($\alpha 1$, $\alpha 2$) zwischen 8° und 45° bilden, wobei die Winkel $\alpha 1$ und $\alpha 2$ zu beiden Seiten der Umfangsrichtung ausgerichtet sind, die wiederum radial von einem Laufstreifen überdeckt wird, der über zwei Flanken mit zwei Wülsten verbunden ist, wobei der Laufstreifen mindestens zwei radial übereinander liegende Lagen aus Elastomermischungen umfasst,

- wobei sich die beiden Arbeitsscheitellagen (51, 52) axial über mindestens die axiale Breite erstrecken, die zwischen den beiden axial äußersten Umfangsrillen liegt, und allein dafür vorhanden sind, die Scheitelbewehrung (5) über mindestens 80 % der axialen Breite der Scheitelbewehrung (5) zu bilden,
- wobei die Verstärkungselemente der radial äußersten Arbeitslage (52) einen Winkel $\alpha 2$ mit der Umfangsrichtung bilden, der dem absoluten Wert nach größer als der Winkel $\alpha 1$ ist, der von den Verstärkungselementen der radial innersten Arbeitslage (51) mit der Umfangsrichtung gebildet wird,
- wobei der absolute Wert der Differenz zwischen den absoluten Werten der Winkel $\alpha 2$ und $\alpha 1$ größer als 4° ist,
- wobei der mittlere Winkel $\alpha$ die folgende Gleichung erfüllt:

$$14+131*\exp(-L/100) < \alpha < 20+164*\exp(-L/100),$$

wobei $\alpha$ durch die Gleichung $\mathrm{Arctan}((\tan(|\alpha 1|)*\tan(|\alpha 2|))^{1/2})$ definiert ist, wobei L die entlang der axialen Richtung gemessene und in mm ausgedrückte maximale Breite des Luftreifens ist,
- wobei der Ausschöpfungsgrad des Bruchpotentials F2/FR2 der radial äußersten Arbeitslage kleiner als 1/6 ist, wobei:

FR2 die Bruchkraft bei uniaxialer Dehnung der Seile der radial äußersten Arbeitslage ist, gemessen bei Zug nach der Norm ISO 6892 von 1984 an den aus neuen Luftreifen entnommenen Seilen,

$$F2 = p_2 * Tc * [(\tan(|\alpha 1|)/((\tan(|\alpha 1|)+\tan(|\alpha 2|))) / \cos^2(|\alpha 2|) + C_F],$$

mit

$$Tc = 0{,}092 * P * Rs* ( 1-(Rs^2-RL^2)/(2*Rt*Rs) ),$$

P: Fülldruck des Luftreifens,

$$C_F = 0{,}00035*(\min((L-80) / \sin(|\alpha 1|), (L-80) / \sin(|\alpha 2|), 480)-480),$$

$p_2$: Schrittweite der Anbringung der Verstärkungselemente der radial äußersten Arbeitsscheitellage, gemessen senkrecht zu den Verstärkungselementen am Umfangsmittel, Rs = Re - Es,
Re: Außenradius des Luftreifens, gemessen am radial äußersten Punkt auf der Oberfläche des Laufstreifens des Luftreifens, wobei die Oberfläche extrapoliert wird, um die möglichen Hohlräume auszugleichen,
Es: radialer Abstand zwischen dem radial äußersten Punkt des Luftreifens und seiner orthogonalen Projektion auf die radial äußere Fläche eines Verstärkungselements der radial innersten Arbeitsscheitellage,
RL: Mittelpunkt der Radien der axial äußersten Punkte jeder Seite des Luftreifens,
Rt: Radius des Kreises, der durch drei auf der Außenoberfläche des Laufstreifens außerhalb der Hohlräume liegende Punkte verläuft, die ausgehend von einem Schulterende in jeweiligen axialen Abständen von ¼, ½ und ¾ der Breite des Laufstreifens definiert werden **dadurch gekennzeichnet, dass** das Profil des Laufstreifens mindestens zwei Umfangsrillen beinhaltet,
dadurch, dass die den radial äußeren Teil des Laufstreifens bildende erste Lage aus einer ersten Elastomermischung besteht, die einen Elastizitätsmodul unter Spannung bei 10 % Dehnung kleiner als oder gleich 10 MPa, gemessen bei Zug nach der Norm AFNOR-NFT-46002 von September 1988, aufweist,

- dadurch, dass eine radial innere zweite Lage aus einem zentralen Teil und aus zwei axial äußeren Teilen besteht, wobei der zentrale Teil eine axiale Breite aufweist, die zwischen den Enden der Lage aus Verstärkungselementen der axial am wenigsten breiten Scheitelbewehrung liegt,
- dadurch, dass der zentrale Teil der zweiten Lage aus einer zweiten Elastomermischung besteht, die einen Elastizitätsmodul unter Spannung bei 10 % Dehnung größer als oder gleich 15 MPa, gemessen bei Zug nach der Norm AFNOR-NFT-46002 von September 1988, aufweist,
- dadurch, dass die zweite Elastomermischung einen maximalen Wert von tan(δ), bezeichnet als tan(δ)max, kleiner als oder gleich 0,30, gemessen nach der Norm ASTM D 5992-96, aufweist,
- dadurch, dass die Dicke H, gemessen entlang der radialen Richtung des zentralen Teils, ausgedrückt in Millimetern, größer als oder gleich 1 + max(1,5*($p_2$ - 1,5) + 11*(F2/FR2 -0,14),0) ist und
- dadurch, dass die beiden axial äußeren Teile der zweiten Lage aus einer dritten Elastomermischung bestehen, die einen maximalen Wert von tan(δ), bezeichnet als tan(δ)max, kleiner als 0,15 aufweist.

2. Luftreifen (1) nach Anspruch 1, **dadurch gekennzeichnet, dass** die den radial äußeren Teil des Laufstreifens bildende erste Lage radial innerhalb der mindestens zwei Umfangsrillen über eine entlang der radialen Richtung gemessene Dicke größer als oder gleich 1 mm vorhanden ist und dass die zweite Lage in Kontakt mit der den radial äußeren Teil des Laufstreifens bildenden ersten Lage ist.

3. Luftreifen (1) nach Anspruch 1 oder 2, **dadurch gekennzeichnet, dass** die Verstärkungselemente der beiden Arbeitsscheitellagen (51, 52) metallisch sind.

4. Luftreifen (1) nach einem der Ansprüche 1 bis 3, **dadurch gekennzeichnet, dass** der absolute Wert der Differenz zwischen den absoluten Werten der Winkel α2 und α1 größer als oder gleich 10° ist und bevorzugt größer als 14° ist.

5. Luftreifen (1) nach einem der Ansprüche 1 bis 4, **dadurch gekennzeichnet, dass** der Ausschöpfungsgrad des Bruchpotentials F2/FR2 der radial äußersten Arbeitslage (52) kleiner als 1/8 ist.

6. Luftreifen (1) nach einem der Ansprüche 1 bis 5, **dadurch gekennzeichnet, dass** der Ausschöpfungsgrad des Bruchpotentials F1/FR1 der radial innersten Arbeitslage (51) kleiner als 1/3 ist, wobei:

   FR1 die Bruchkraft bei uniaxialer Dehnung der Seile der radial innersten Arbeitslage ist, gemessen bei Zug nach der Norm ISO 6892 von 1984 an den aus neuen Luftreifen entnommenen Seilen,

$$F1 = p_1 * Tc * [(\tan(|\alpha 2|)/((\tan(|\alpha 1|)+\tan(|\alpha 2|))) / \cos^2(|\alpha 1|) + C_F],$$

   mit
   $p_1$: Schrittweite der Anbringung der Verstärkungselemente der radial innersten Arbeitsscheitellage, gemessen senkrecht zu den Verstärkungselementen an der Umfangsmittelebene.

7. Luftreifen (1) nach Anspruch 6, **dadurch gekennzeichnet, dass** der Ausschöpfungsgrad des Bruchpotentials F1/FR1 der radial innersten Arbeitslage (51) mindestens 30 % größer als der Ausschöpfungsgrad des Bruchpotentials F2/FR2 der radial äußersten Arbeitslage (52) ist.

**8.** Luftreifen (1) nach einem der vorhergehenden Ansprüche, **dadurch gekennzeichnet, dass** die beiden Arbeitsscheitellagen (51, 52) allein dafür vorhanden sind, die Scheitelbewehrung über die gesamte axiale Breite der Scheitelbewehrung (5) zu bilden.

## Claims

**1.** - Tyre (1) for a vehicle of the heavy duty type, comprising a crown reinforcement (5) comprising two working crown layers (51, 52) of reinforcing elements crossing from one layer to the other and making with the circumferential direction angles ($\alpha 1$, $\alpha 2$) comprised between 8° and 45°, said angles $\alpha 1$ and $\alpha 2$ being oriented on either side of the circumferential direction, said crown reinforcement being capped radially by a tread, which is connected to two beads by two side walls, said tread comprising at least two radially superposed layers of elastomer compounds,

- the two working crown layers (51, 52) extending axially over at least the axial width situated between the two axially outermost circumferential grooves, and are the only layers present to constitute the crown reinforcement (5) over at least 80% of the axial width of the crown reinforcement (5),
- the reinforcing elements of the radially outermost working layer (52) forming an angle $\alpha 2$ with the circumferential direction that is greater in terms of absolute value than the angle $\alpha 1$ formed by the reinforcing elements of the radially innermost working layer (51) with the circumferential direction,
- the absolute value of the difference between the absolute values of the angles $\alpha 2$ and $\alpha 1$ being greater than 4°,
- the mean angle $\alpha$ satisfying the relationship:

$$14+131*\exp(-L/100) < \alpha < 20+164*\exp(-L/100),$$

$\alpha$ being defined by the relationship $\mathrm{Arctan}((\tan(|\alpha 1|)*\tan(|\alpha 2|))^{1/2})$, L being the maximum width of the tyre measured in the axial direction and expressed in mm,
- the rupture potential index F2/FR2 of the radially outermost working layer is less than 1/6, where:

FR2 is the breaking force in uniaxial extension of the cords of the radially outermost working layer, measured under tension in accordance with the standard ISO 6892 of 1984 on cords extracted from new tyres,

$$F2 = p_2 * Tc * [(\tan(|\alpha 1|)/((\tan(|\alpha 1|)+\tan(|\alpha 2|))) / \cos^2(|\alpha 2|) + C_F],$$

where

$$Tc = 0.092 * P * Rs* (1-(Rs^2-R_L^2)/(2*Rt*Rs)),$$

P is the tyre inflation pressure,

$$C_F = 0.00035*(\min((L-80) / \sin(|\alpha 1|), (L-80) / \sin(|\alpha 2|), 480)-480),$$

$p_2$ is the pitch at which the reinforcing elements of the radially outermost working crown layer are laid, measured perpendicularly to the reinforcing elements at the circumferential median,

$$Rs = Re - Es,$$

Re is the external radius of the tyre, measured at the radially outermost point on the tread surface of the tyre, said surface being extrapolated in order to fill any voids there might be,
Es is the radial distance between the radially outermost point of the tyre and the orthogonal projection thereof onto the radially exterior face of a reinforcing element of the radially innermost working crown layer,
RL is the mean of the radii of the axially outermost points on each side of the tyre,

Rt is the radius of the circle passing through three points situated on the exterior surface of the tread outside of the voids, defined from a shoulder end at respective axial distances equal to ¼, ½ and ¾ of the width of the tread,
**characterized**

- **in that** the tread pattern comprises at least two circumferential grooves
- **in that** the first layer forming the radially outer part of the tread is made up of a first elastomer compound having an elastic modulus under tension at 10% elongation less than or equal to 10 MPa, measured under tension according to the standard AFNOR-NFT-46002 of September 1988,
- **in that** a second radially interior layer is made up of a central part and of two axially outer parts, said central part having an axial width comprised between the ends of the axially least wide layer of crown reinforcing elements,
- **in that** said central part of the second layer is made of a second elastomer compound having an elastic modulus under tension at 10% elongation greater than or equal to 15 MPa, measured under tension according to the standard AFNOR-NFT-46002 of September 1988,
- **in that** the second elastomeric compound has a maximum value of tan(δ), denoted tan(δ)max, less than or equal to 0.30, measured according to standard ASTM D 5992-96,
- **in that** the thickness H measured in the radial direction of said central part, expressed in millimetres, is greater than or equal to 1 + max(1.5*($p_2$ - 1.5) + 11*(F2/FR2 - 0.14),0), and
- **in that** said axially outer parts of the second layer are made of a third elastomer compound having a maximum value of tan(δ), denoted tan(δ)max, less than 0.15.

**2.** - Tyre (1) according to Claim 1, **characterized in that** said first layer forming the radially outer part of the tread is present radially on the inside of said at least two circumferential grooves, over a thickness measured in the radial direction that is greater than or equal to 1 mm, **and in that** said second layer is in contact with said first layer forming the radially outer part of the tread.

**3.** - Tyre (1) according to Claim 1 or 2, **characterized in that** the reinforcing elements of said two working crown layers (51, 52) are made of metal.

**4.** - Tyre (1) according to one of Claims 1 to 3, **characterized in that** the absolute value of the difference between the absolute values of the angles α2 and α1 is greater than or equal to 10°, and preferably greater than 14°.

**5.** - Tyre (1) according to one of Claims 1 to 4, **characterized in that** the rupture potential index F2/FR2 of the radially outermost working layer (52) is less than 1/8.

**6.** - Tyre (1) according to one of Claims 1 to 5, **characterized in that** the rupture potential index F1/FR1 of the radially innermost working layer (51) is less than 1/3, wherein:

FR1 is the breaking force in uniaxial extension of the cords of the radially innermost working layer, measured under tension in accordance with the standard ISO 6892 of 1984 on cords extracted from new tyres,

$$F1 = p_1 * Tc * [(\tan(|\alpha2|)/((\tan(|\alpha1|)+\tan(|\alpha2|))) / \cos^2(|\alpha1|) + C_F],$$

where
$p_1$ is the pitch at which the reinforcing elements of the radially innermost working crown layer are laid, measured perpendicularly to the reinforcing elements at the circumferential median plane.

**7.** - Tyre (1) according to Claim 6, **characterized in that** the rupture potential index F1/FR1 of the radially innermost working layer (51) is at least 30% higher than the rupture potential index F2/FR2 of the radially outermost working layer (52).

**8.** - Tyre (1) according to one of the preceding claims, **characterized in that** the two working crown layers (51, 52) are the only ones present to form the crown reinforcement over the entirety of the axial width of the crown reinforcement (5).

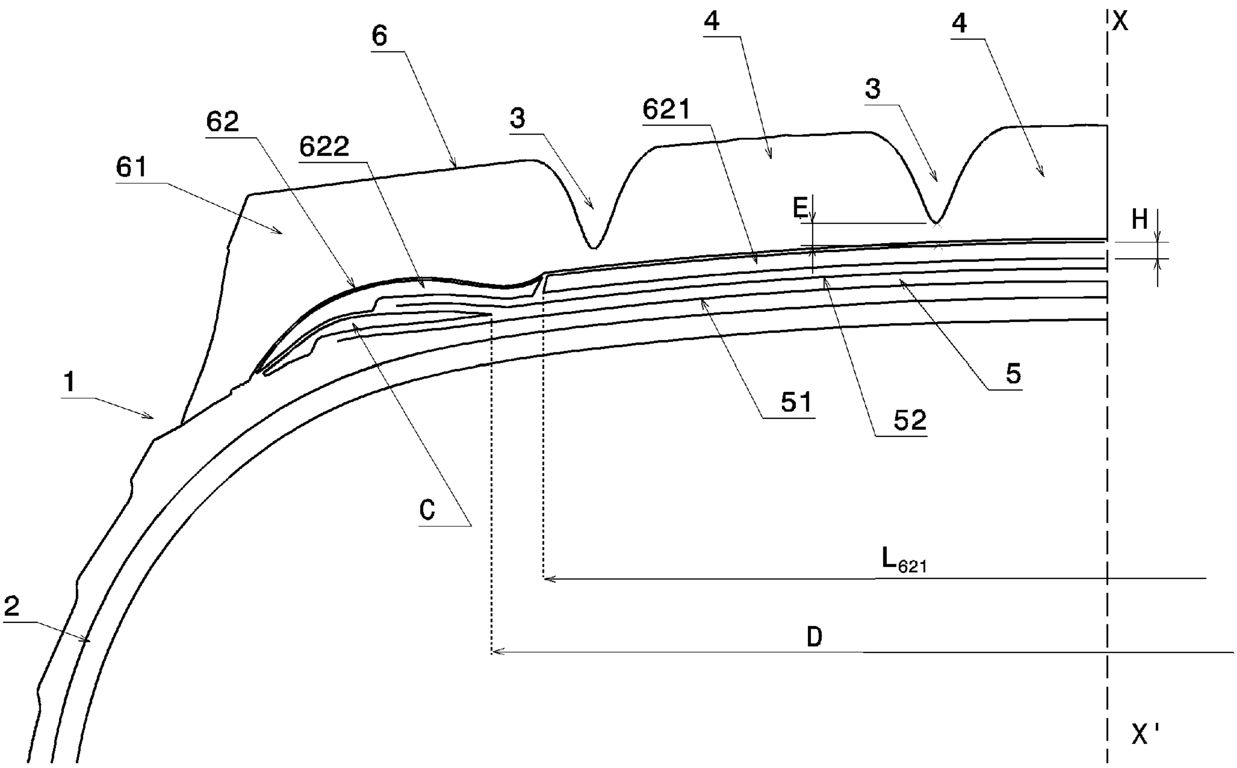


Figure

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 1389428
- FR 2222232
- FR 2728510
- WO 9924269 A
- US 6247512 B
- WO 2017149222 A
- WO 2018162863 A